# EUROPEAN PATENT APPLICATION

(11) **EP 4 541 711 A1**
(43) Date of publication of application: **23.04.2025**
(21) Application number: 23204262.2
(22) Date of filing: 18.10.2023
(51) Int. Cl.: B64C 3/28, B64C 9/02, B64C 3/50

(54) **AN ATTACHMENT DEVICE FOR A SUPPORT STRUCTURE OF AN AERODYNAMIC SYSTEM AND METHOD FOR PROVIDING AN ATTACHMENT DEVICE**

(71) Applicant: Airbus Operations GmbH, 21129 Hamburg (DE)
(72) Inventor: Schlipf, Bernhard, Hamburg (DE); Lorenz, Christian, Hamburg (DE); Kleemiß, Steffen, Hamburg (DE); Haunert, Jan, Hamburg (DE)

(57) **Abstract**

The invention relates to an attachment device (1) for a support structure (111) of an aerodynamic system (110) of an aircraft (100). The attachment device (1) comprises a first coupling unit (10) configured to couple a component (30) to the support structure (111) via a first bolted connection (11) and a second coupling unit (20) spaced apart from the first coupling unit (10) and configured to couple the component (30) to the support structure (111) via a second bolted connection (21). The first bolted connection (11) defines a first bolt axis (12) and the second bolted connection (21) defines a second bolt axis (22). The first bolted connection (11) is configured such that the first bolt axis (12) is directed towards the second bolt axis (22). The invention further relates to a method for providing an attachment within an aerodynamic system (110).

## Description

### Field of the invention

The invention relates to attachments for use in aerodynamic structures. In particular, the invention relates to an attachment device for a support structure of an aerodynamic system as well as to a method for providing an attachment within an aerodynamic system.

### Technical Background

Aerodynamic systems usually comprise aerodynamic outer surfaces and a support structure to which the aerodynamic outer surfaces are attached. For example, the wing box of an aircraft wing may include structural components which support the wing skin, i.e., the aerodynamic surfaces of the wing. Usually a rib-structure is attached to the wing box at the forward leading-edge area of the wing, and externally of the wing box itself. The rib structure including the so-called leading-edge ribs carries leading-edge devices like slats and the skin on the leading-edge ribs itself. In particular, the leading-edge ribs are attached to the front spar of the wing box. The manufacturing and assembly process may be complex since several components have to be correctly dimensioned and attached to each other.

US 2023/0064922 A1 and EP 4 140 878 A1 describe a wing for an aircraft, including a main wing, and a leading-edge high lift assembly including a high lift body, and a connection assembly connecting the high lift body to the main wing such that the high lift body is movable relative to the main wing between stowed and deployed positions.

### Summary of the invention

It may be seen as an object of the invention to facilitate the assembly of an aerodynamic system.

A device and a method according to the features of the independent claims are provided. Further embodiments of the invention are evident from the dependent claims and from the following description.

According to an aspect of the invention, an attachment device for a support structure of an aerodynamic system of an aircraft is provided. The attachment device comprises a first coupling unit configured to couple a component to the support structure via a first bolted connection. The attachment device further comprises a second coupling unit spaced apart from the first coupling unit and configured to couple the component to the support structure via a second bolted connection. The first bolted connection defines a first bolt axis, and the second bolted connection defines a second bolt axis, wherein the first bolted connection is configured such that the first bolt axis is directed towards the second bolt axis.

The inventive device provides an attachment mechanism in which the bolted connections are oriented with respect to each other such that tolerances can be efficiently compensated. In particular, the bolted connections may include bolts having bolt axis orientations that can help to compensate for tolerances during the assembly process in which the component is attached to the support structure and in which, possibly, further elements or structures are attached to the component and/or the support structure.

The first coupling unit and the second coupling unit may each provide a connection between the component and the support structure. Besides the first and second coupling units, it is possible that the attachment device further comprises a third, fourth, fifth coupling units or even more coupling units. As the first and second coupling units, these further coupling units may also be configured to couple the component to the support structure via third, fourth, fifth bolted connections or further bolted connections, respectively. It is possible that each of these bolted connections may include a corresponding bolt axis with a specified orientation. Although such further bolted connections may be integrated into the attachment device, the inventive device will, for a better understanding, be described in the following with regard to two coupling units, i.e., two bolted connections.

The first coupling unit and the second coupling unit may be separated from each other by a predetermined distance. Hence, the bolted connections are also separated by a certain distance and can be assembled independent from each other. The first bolted connection may comprise at least one bolt element which defines the first bolt axis pointing in a first direction. Analogously, the second bolted connection may comprise at least one bolt element which defines the second bolt axis pointing in a second direction. It is understood that the bolt axes are virtual axes indicating an orientation of the respective bolted connection. The bolted connections may provide a pivot connection which allows a (small) pivot movement for tolerance compensation.

The first bolt axis may point in a direction towards the second bolt axis. This could mean that that first bolt axis does not directly point onto the second bolt axis, but at least into a nearby region around the second bolt axis. For example, the first bolt axis may substantially point towards the second bolt axis, but does not directly intersect the second bolt axis. In another example, the first bolt axis may exactly intersect or cross the second bolt axis.

The first bolt axis may be substantially perpendicular to the second bolt axis. However, the first bolted connection and the second bolted connection may be arranged with respect to each other such that the first bolt axis and the second bolt axis intersect each other at an acute or obtuse angle.

If three coupling units are comprised by the attachment device, there may be the first bolted connection having the first bolt axis, the second bolted connection having the second bolt axis, and a third bolted connection having a third bolt axis. In this case, the second bolt axis and the third bolt axis may be collinearly arranged with respect to each other, while the first bolt axis is directed towards the second bolt axis and/or the third bolt axis.

According to an embodiment, the first bolt axis intersects the second bolt axis.

In this case, both bolt axes cross each other at an intersection point. The intersection point may be located at the second bolted connection, e.g., at a bolt element of the second bolted connection. For example, the first bolt axis may be directed towards the bolt element of the second bolted connection.

According to an embodiment, the first bolt axis extends substantially perpendicular to the second bolt axis.

In an example, the first bolt axis and the second bolt axis are exactly perpendicular with respect to each other. As noted above, the axis described herein may refer to virtual axes.

According to an embodiment, the first coupling unit comprises a tolerance compensation member.

This tolerance compensation member may be integrated within the first bolted connection. It may laterally shift the first bolt axis with respect to a bolt axis that would be present if there was no such tolerance compensation member. For example, the first bolt axis may be shifted laterally, but may still be directed towards the second bolt axis.

According to an embodiment, the tolerance compensation member of the first coupling unit provides an eccentricity for the first bolted connection.

For example, the tolerance compensation member may then comprise an excenter bushing such that a lateral offset of the first bolt axis can be adjusted. The introduction of an eccentricity on the first bolted connection or on an interfacing bush can help to compensate tolerances of the component and the support structure. By this eccentricity, the angle of the component versus the support structure can be adjusted.

According to an embodiment, the second coupling unit comprises a tolerance compensation member.

This tolerance compensation member may be integrated within the second bolted connection. It may laterally shift the second bolt axis with respect to a bolt axis that would be present if there was no such tolerance compensation member.

According to an embodiment, the tolerance compensation member of the second coupling unit provides an eccentricity for the second bolted connection.

For example, the tolerance compensation member may then comprise an excenter bushing such that a lateral offset of the second bolt axis can be adjusted. The introduction of an eccentricity also on the second bolted connection or on an interfacing bush can help to compensate tolerances of the component and the support structure. By this eccentricity, the angle of the component versus the support structure can be further adjusted.

According to an embodiment, the first coupling unit and/or the second coupling unit comprises a spherical bearing.

In particular, when the range of required compensation is large, there might be a spherical bearing required at the first coupling unit. This spherical bearing, if integrated within the first coupling unit, may adjust the direction into which the first bolt axis points. Accordingly, a spherical bearing that is integrated within the second coupling unit, may adjust the direction into which the second bolt axis points.

According to an embodiment, the attachment device comprises a third coupling unit which is configured to couple the component to the support structure via a third bolted connection, wherein the third bolted connection defines a third bolt axis which is substantially collinear with the second bolt axis.

As explained above, the second bolted connection and the third bolted connection may be arranged such that their bolt axes are collinear and such that both bolt axes thus intersect the first bolt axis at the same angle. It can thus be said that the first bolt axis is directed towards both the second and third bolt axes.

According to an embodiment, the component is a rib element, wherein the first coupling unit and the second coupling unit are configured to couple the rib element to the support structure. Alternatively or additionally, the component is a sub-assembly and wherein the first coupling unit and the second coupling unit are configured to couple the sub-assembly to the support structure.

In particular, the rib element may be attached to a spar of the support structure via the first and second coupling unit, and possibly via further coupling units. Similarly, the sub-assembly may be attached to a spar of the support structure. The rib element may be part of a stiffening structure for supporting an outer skin element. The sub-assembly may be a mounting assembly for movably mounting an aerodynamic device to the support structure.

It is possible that the first coupling unit comprises the first bolted connection and a first mounting element which mounts the first bolted connection to the support structure, for example using fasteners like screws or rivets. Furthermore, the second coupling unit may comprise the second bolted connection and a second mounting element which mounts the second bolted connection to the support structure, for example using fasteners like screws or rivets.

According to an embodiment, the component comprises a kinematics assembly.

The kinematics assembly may comprise a mechanism for movably mounting an aerodynamic device, for example, a leading-edge slat, to the support structure. For example, the kinematics assembly may represent a kinematics module configured for a retracting movement and a deploying movement of the aerodynamic device with respect to the support structure.

According to an embodiment, the support structure is a wing box of an aircraft wing.

In particular, the support structure may be a so-called torsional box of an aerodynamic lift component, e.g., an aircraft wing. The first and the second coupling unit may each be fixedly mounted to a spar element, e.g., a front spar, of the wing box. There may be outer skin elements which are attached to the wing box as well as to the component that is attached to the wing box via the coupling units.

According to an aspect, an aircraft wing is provided. The aircraft wing comprises the inventive attachment device as described herein. The aircraft wing further comprises a wing box and a wing leading-edge component, wherein the attachment device couples the wing leading-edge component to the wing box.

In an example, the wing leading-edge component may be a coupling module, e.g., a kinematics module, for movably coupling a wing leading-edge slat to the wing box.

According to an example, an aircraft comprising the inventive attachment device as described herein is provided. The aircraft may be a transport or passenger aircraft.

According to another aspect, a method for providing an attachment within an aerodynamic system of an aircraft is provided. A step of the method comprises providing a first coupling unit having a first bolted connection. Another step comprises providing a second coupling unit having a second bolted connection. Another step comprises arranging the first coupling unit spaced apart from the second coupling unit. Another step comprises coupling a component to the support structure via the first bolted connection and via the second bolted connection such that a first bolt axis of the first bolted connection is directed towards a second bolt axis of the second bolted connection.

The steps of the inventive method may be performed in the indicated order. However, another order may be possible.

### Brief description of the drawings

The present invention will hereinafter be described in conjunction with the following drawing figures, wherein like numerals denote like elements, and wherein:
- Fig. 1: shows a rib-spar assembly including a rib element attached to a spar element.
- Fig. 2: shows skin elements attached to the rib-spar assembly of Fig. 1.
- Fig. 3: shows a kinematics module-spar assembly including a kinematics module attached to a spar element.
- Fig. 4: shows an attachment device for attaching a component to a support structure.
- Fig. 4A: shows a detailed view of a first bolted connection of the attachment device of Fig. 4.
- Fig. 5: shows an alternative attachment device for attaching a component to a support structure.
- Fig. 6: shows another alternative attachment device for attaching a component to a support structure.
- Fig. 7: shows an aircraft comprising at least one of the attachment devices shown in Figures 4 to 6.
- Fig. 8: shows a flow diagram of a method for providing an attachment within an aerodynamic system of an aircraft.

### Detailed description of exemplary embodiments

The representations and illustrations in the drawings are schematic and not to scale. A better understanding of the attachment device and method described above may be obtained through a review of the illustrations accompanying this application together with a review of the detailed description that follows.

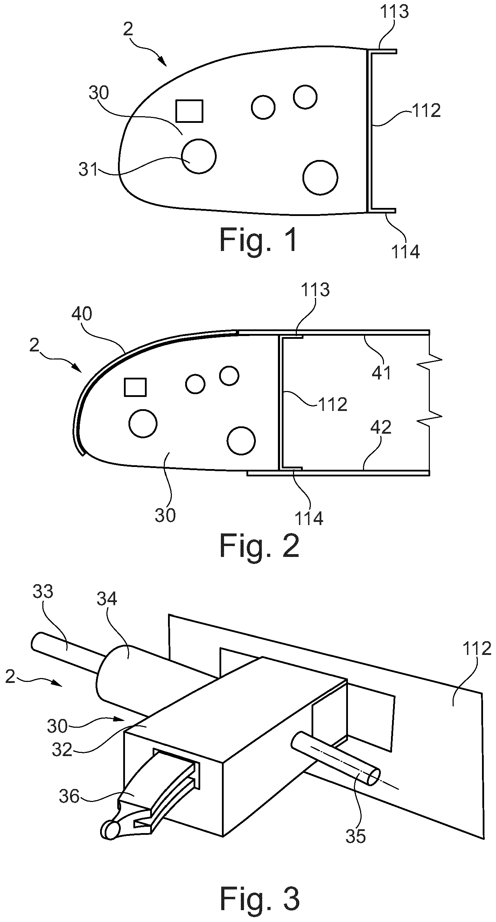

Fig. 1 shows a rib-spar assembly 2 including a rib element 30 attached to a spar element 112, wherein the spar element 112 may be part of a support structure (not shown in Fig. 1). For example, the spar element 112 may be part of a wing box of an aircraft wing. The spar element 112 comprises spar flanges 113, 114 extending away from the rib element 30 and towards the support structure. The rib element 30 may include further features like openings 31 for wirings, etc.

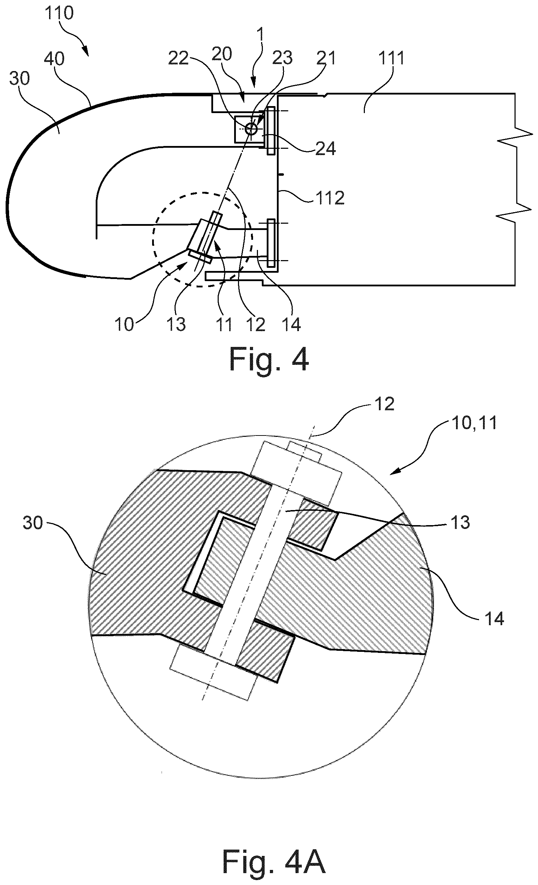

Fig. 2 shows skin elements 40, 41, 42 attached to the rib element 30 and the spar element 112 of Fig. 1. In this example, the spar flanges 113, 114 to which the skin elements 41, 42 are attached extend away from the rib element 30 and towards the support structure. However, it may be possible that the spar flanges 113, 114 to which the skin elements 41, 42 are attached extend in the opposite direction, i.e., away from the support structure and towards the rib element 30. That would enable a higher degree of automation because tooling access from outside of the support structure, e.g., the wing box, would be enabled. Furthermore, this may also enable a build sequence where the spar element 112 and the skin elements 41, 42 are assembled first and, afterwards, the rib elements 30 are attached. This new build sequence might also enable a more modular approach where the rib elements 30 can be pre-assembled with the nose skin element 40, e.g., a so-called D-nose skin, and potentially also with system routings already integrated into the rib elements 30. An attachment device for attaching such a rib element 30 to the spar element 112 will be described in more detail with respect to Figures 4 to 6.

Fig. 3 shows a sub module-spar assembly 2 including a kinematics module 30 attached to a spar element, e.g., to the spar element 112 shown in Fig. 1. The kinematics module 30 may be configured to movably couple an aerodynamic movable, e.g., a leading-edge slat (not shown in Fig. 3), to the spar element 112. The kinematics module 30 may include a housing 32 in which a slat track 36 is supported, wherein the slat track 36 is driven by a drive unit including an input transmission shaft 33, a geared rotary actuator (GRA) 34 and a drive through transmission shaft 35. An attachment device for attaching the kinematics module 30 to the spar element 112 will now be described in more detail with respect to Figures 4 to 6.

Fig. 4 shows an attachment device 1 for attaching a component 30, for example the rib element 30 of Figures 1 and 2 and/or the kinematics module 30 of Fig. 3, to the support structure 111, e.g., to the spar element 112 of the support structure 111. The spar element 112 may be a front spar of a wing box which extends in a spanwise direction of a wing 110 into which the wing box is integrated. In Fig. 4, only a part of the wing 110 is shown.

The attachment device 1 comprises a first coupling unit 10 configured to couple the component 30 to the support structure 111 via a first bolted connection 11. The first bolted connection 11 includes a bolt-like element 13, for example a bolt 13, a pin 13, a screw 13 or the like. The bolt element 13 may be a longitudinally extending element with shaft portion. The bolt element 13, in particular the longitudinal shaft portion of the bolt element 13, has a (virtual) bolt axis 12.

The attachment device 1 further comprises a second coupling unit 20 spaced apart from the first coupling unit 10 and configured to couple the component 30 to the support structure 111 via a second bolted connection 21. The first coupling unit 10 may be a lower coupling unit of the attachment device 1 as it couples the component 30 to the spar element 112 at a lower part of the component 30, while the second coupling unit 20 may be an upper coupling unit of the attachment device 1 as it couples the component 30 to the spar element 112 at an upper part of the component 30. The second bolted connection 21 includes a bolt-like element 23, for example a bolt 23, a pin 23, a screw 23 or the like. The bolt element 23 may be a longitudinally extending element with shaft portion. The bolt element 23, in particular the longitudinal shaft portion of the bolt element 23, has a (virtual) bolt axis 22.

Hence, the bolt element 13 of the first bolted connection 11 defines a first bolt axis 12 and the bolt element 23 of the second bolted connection 21 defines a second bolt axis 22. The first bolted connection 11 is arranged such that the first bolt axis 12 is directed towards the second bolt axis 22 or directly towards the second bolt element 23. In other words, the bolt element 13 of the first bolted connection 11 extends inside first coupling unit 10 such that the first axis 12 of the bolt element 13 extends in a direction that points to the second bolt axis 22 of the bolt element 23.

The first bolted connection 11 may be supported by a mounting element 14 which in turn is attached to the spar element 112 of the support structure 111. Similarly, the second bolted connection 21 may be supported by a mounting element 24 which in turn is attached to the spar element 112 of the support structure 111.

In Fig. 4, it is recognizable that the first bolt axis 12 points towards the second bolt axis 22. It is noted that the second bolt axis 22 extends orthogonally into to the drawing plane in this case so that the second bolt axis 22 is indicated by cross within the second bolted connection 21. The second bolt axis 22 may extend in a spanwise direction, e.g., parallel to a spar element 112. By an axial clearance, this may allow for a compensation of tolerances with respect to the location of the first bolted connection 11 without shimming. In particular, by arranging the first bolted connection 11 such that the first bolt axis 12 points to and/or intersects the second bolt axis 22, an axial play will allow compensation of tolerances, with respect to the second bolted connection 21, in the section-plane.

The first bolt axis 12 may be arranged perpendicular to the second bolt axis 22, but may also be inclined with respect to the second bolt axis 22, for example with an acute or obtuse angle. In the illustrated example, the first bolt axis 12 intersects the second bolt axis 22. However, depending on the specific constructional situation, there may be deviations of a few millimeters or centimeters with which the first bolt axis 12 passes by the second bolt axis 22 such that the first bolt axis 12 may not directly intersect the second bolt axis 22. In such a case, the first bolt axis 12 may however intersect the second bolt element 23.

Fig. 4A shows a detailed view of the first bolted connection 11 of the attachment device 1 of Fig. 4 (cf. circle with dashed lines in Fig. 4). It is noted that the second coupling unit 20 and possibly further coupling units may be configured in the same or a similar manner. Fig. 4A shows how the component 30 is coupled to the mounting element 14 via the first bolt element 13. The component 30 may include a yoke via which the component 30 couples to the first bolt element 13. This bolt arrangement may allow a small rotational movement about the first bolt axis 12 which facilitates the assembly process as described above. In particular, this arrangement provides some flexibility within the attachment device 1, for example during the assembly of the component 30, the support structure 111 and the skin element 40 (cf. Fig. 4). The same principle may apply to the second bolted connection 21 and any further bolted connections integrated into the attachment device 1.

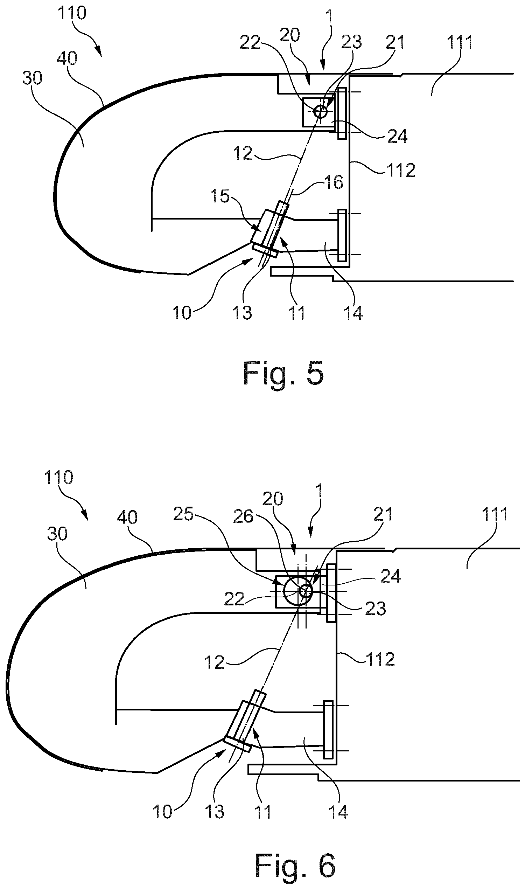

Fig. 5 shows an alternative attachment device 1 for attaching the component 30 to the support structure 111. In this case, the first coupling unit 10 comprises a tolerance compensation member 15 that provides an eccentricity for the first bolted connection 11. In particular, the compensation member 15 may comprise an excenter element or a bushing element, for example an excenter bushing, which allows the first (virtual) bolt axis 12 to be shifted towards a new (virtual) first bolt axis 16 which is slightly offset with respect to the first bolt axis 12. By introducing such an eccentricity at the first bolted connection 11 or at an interfacing bushing, tolerances of the support structure 111, e.g., a wing box, and the component 30, e.g., a rib element 30 or a sub-assembly, can be compensated. By this eccentricity, the angle of the component 30 with respect the support structure 111 can be adjusted and/or rigged. When the range of required compensation is larger, a spherical bearing can be integrated at the first bolted connection 11 and/or at the second bolted connection 21. This may facilitate the assembly process of the component 30, the support structure 111 and the skin element 40. With respect to the remaining components of Fig. 5, reference is made to Fig. 4 above.

Fig. 6 shows another alternative attachment device 1 for attaching the component 30 to the support structure 111. In this case, the second coupling unit 20 comprises a tolerance compensation member 25 that provides an eccentricity for the second bolted connection 21. In particular, the compensation member 25 may comprise an excenter element or a bushing element, for example an excenter bushing, which allows the second (virtual) bolt axis 22 to be shifted towards a new (virtual) second bolt axis 26 which is slightly offset with respect to the second bolt axis 22. The first bolt axis 12 may then be oriented such that the first bolt axis 12 points towards or intersects the new second bolt axis 26. By introducing an eccentricity at the second bolted connection 21 or at an interfacing bushing, tolerances of the support structure, e.g., a wing box, and the component 30, e.g., a rib element 30 or a sub-assembly 30, can be compensated in a lateral dimension. With respect to the remaining components of Fig. 6, reference is made to Fig. 4 above. The concepts of eccentric bolts as described with respect to Figures 5 and 6 can be combined.

In contrast to known concepts for leading-edge-rib attachments, the present concept causes less constraint forces and allows more tolerances. The described concepts with eccentric elements additionally allow for a compensation of such tolerances.

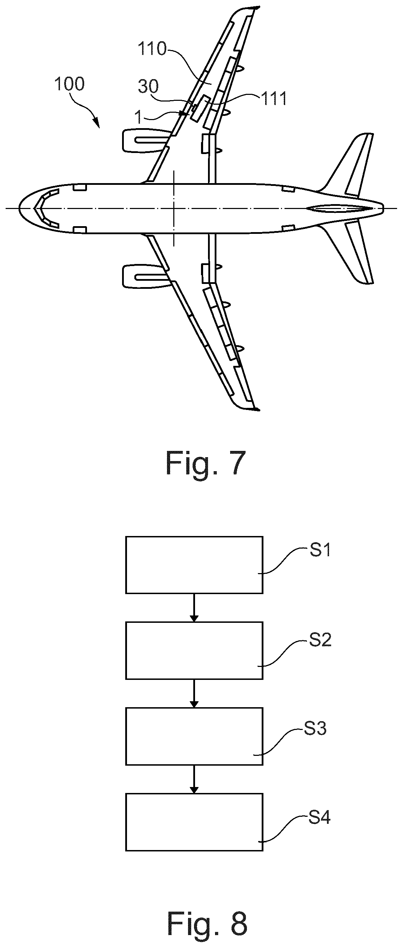

Fig. 7 shows an aircraft 100 comprising at least one of the attachment devices 1 shown in Figures 4 to 6, preferably several of the attachment devices 1 shown in Figures 4 to 6. The aircraft 100 comprises an aircraft wing 110 which includes the at least one attachment device 1. The aircraft wing 110 further comprises a wing box 111 and a wing leading-edge component 30, wherein the at least one attachment device 1 couples the wing leading-edge component 30 to the wing box 111.

Fig. 8 shows a flow diagram of a method for providing an attachment within an aerodynamic system 110 of an aircraft 100, for example including the provision of an attachment device 1 as described with respect to Figures 4 to 6. In a step S1 of the method, a first coupling unit 10 having a first bolted connection 11 is provided. In a step S2 of the method, a second coupling unit 20 having a second bolted connection 21 is provided. In a step S3 of the method, the first coupling unit 10 is arranged spaced apart from the second coupling unit 20. In a step S4 of the method, a component 30 is coupled to the support structure 111 via the first bolted connection 11 and via the second bolted connection 21 such that a first bolt axis 12 of the first bolted connection 11 is directed towards a second bolt axis 22 of the second bolted connection 21.

## Claims

1. An attachment device (1) for a support structure (111) of an aerodynamic system (110) of an aircraft (100), comprising:
a first coupling unit (10) configured to couple a component (30) to the support structure (111) via a first bolted connection (11);
a second coupling unit (20) spaced apart from the first coupling unit (10) and configured to couple the component (30) to the support structure (111) via a second bolted connection (21);
wherein the first bolted connection (11) defines a first bolt axis (12) and the second bolted connection (21) defines a second bolt axis (22):
wherein the first bolted connection (11) is configured such that the first bolt axis (12) is directed towards the second bolt axis (22).

2. The attachment device (1) of claim 1,
wherein the first bolt axis (12) intersects the second bolt axis (22).

3. The attachment device (1) according to any one of the preceding claims,
wherein the first bolt axis (12) extends substantially perpendicular to the second bolt axis (22).

4. The attachment device (1) according to any one of the preceding claims,
wherein the first coupling unit (10) comprises a tolerance compensation member (15).

5. The attachment device (1) according to claim 4,
wherein the tolerance compensation member (15) of the first coupling unit (10) provides an eccentricity for the first bolted connection (11).

6. The attachment device (1) according to any one of the preceding claims,
wherein the second coupling unit (20) comprises a tolerance compensation member (25).

7. The attachment device (1) according to claim 6,
wherein the tolerance compensation member (25) of the second coupling unit (20) provides an eccentricity for the second bolted connection (21).

8. The attachment device (1) according to any one of the preceding claims,
wherein the first coupling unit (10) and/or the second coupling unit (20) comprises a spherical bearing.

9. The attachment device (1) according to any one of the preceding claims, further comprising:
a third coupling unit (10) configured to couple the component (30) to the support structure (111) via a third bolted connection;
wherein the third bolted connection defines a third bolt axis which is substantially collinear with the second bolt axis (22)

10. The attachment device (1) according to any one of the preceding claims,
wherein the component (30) is a rib element and wherein the first coupling unit (10) and the second coupling unit (20) are configured to couple the rib element to the support structure (111); and/or
wherein the component (30) is a sub-assembly and wherein the first coupling unit (10) and the second coupling unit (20) are configured to couple the sub-assembly to the support structure (111).

11. The attachment device (1) according to any one of the preceding claims,
wherein the component (30) comprises a kinematics assembly.

12. The attachment device (1) according to any one of the preceding claims,
wherein the support structure (111) is a wing box of an aircraft wing.

13. An aircraft wing (110) comprising:
the attachment device (1) according to any one of the preceding claims;
a wing box (111);
a wing leading-edge component (30);
wherein the attachment device (1) couples the wing leading-edge component (30) to the wing box (111).

14. An aircraft (100) comprising the attachment device (1) according to any one of claims 1 to 12.

15. Method for providing an attachment within an aerodynamic system (110) of an aircraft (100), comprising:
providing a first coupling unit (10) having a first bolted connection (11, S1);
providing a second coupling unit (20) having a second bolted connection (21, S2);
arranging the first coupling unit (10) spaced apart from the second coupling unit (20, S3);
coupling a component (30) to the support structure (111) via the first bolted connection (11) and via the second bolted connection (21) such that a first bolt axis (12) of the first bolted connection (11) is directed towards a second bolt axis (22) of the second bolted connection (21, S4).
